# EUROPEAN PATENT APPLICATION

(11) **EP 2 792 545 A2**
(43) Date of publication of application: **22.10.2014**
(21) Application number: 14165243.8
(22) Date of filing: 17.04.2014
(51) Int. Cl.: B60P 7/08

(54) **Device and method for passing a strap over a load**

(30) Priority: 19.04.2013 GB 201307135
(71) Applicant: Travis Perkins PLC, Northampton NN5 7UG (GB)
(72) Inventor: Roden, John, Gwent, NP10 8PE (GB)
(74) Representative: Howick, Nicholas Keith

(57) **Abstract**

A device (10) is provided for passing a strap over a high load (50). The device comprises an articulated arm operable in a first, extended configuration, in which an operator can hold one end of the arm (11) and raise the free end of the arm (12) remote from the operator to the top of the load, and a second, articulated configuration, in which the free end of the arm can be moved across the top of the load (50), beyond the load on the side remote, in use, from the operator.

## Description

The present invention relates to a device and method for passing a strap over a high load.

Securing-components such as strap fasteners, tethering devices and the like may be used to secure loads to the base of a trailer or lorry. Typically, one or more straps are passed over the load and secured at either side to the trailer base before being tensioned to securely hold the load in position. This is of particular importance for securing loads on to the load surface of vehicles such as lorries, trailers, articulated tricks, train carriages or shipping containers, so as to avoid movement of the load during transit.

One method of placing straps over loads is by launching a coiled strap over the cargo using a strap launching device, or similar, as demonstrated in US patent No. US 2006/0153657. The strap launcher is used to launch the cargo strap over a tall or stacked cargo to dispose the distal end of a cargo strap on the far side of the cargo. Both ends of the cargo strap can then be secured to the truck bed. This method is not suitable for use where there is limited space above the top of the cargo, for example, when the top of the cargo is very close to the top of the lorry, and as such, the gap between the load and the lorry roof is very thin.

Conventional strap systems can run on internal wires which can be mounted in an elevated position from the deck of the cargo hold. European patents No. EP 2225997 and EP 2383145 show the use of securing straps that can be stored in the roof section of a trailer to enable them to be moved over goods placed on the trailer as appropriate and then released to secure the load in place.

Where the use of internal wire systems is not possible, the securing of loads becomes more difficult. Straps may have to be passed manually over the load, often by using steps or a platform to reach the top of the load or by the operator climbing onto the trailer floor. This presents health and safety risks to the operator and can be inconvenient and time consuming, especially where several loads must be secured within a trailer.

It is therefore desirable to provide a device which can be used to pass a strap over a load to pass the strap safely from one side of a load to the other and allow the securing of the load to the trailer. It would also be desirable to be able to use the device in conditions where there is limited space above the top of the load.

The present invention provides a device for passing a strap over a high load, the device comprising; an articulated arm operable in a first, extended configuration, in which an operator can hold one end of the arm and raise the free end of the arm remote from the operator to the top of the load, and a second, articulated configuration, in which the free end can be moved across the top of the load, beyond the load on the side remote, in use, from the operator. This allows for the strap to be passed from one side of the high load to the other, even when there is restricted space above the top of the load, with limited inconvenience to the operator.

Preferably, the apparatus may comprise a means for releasably retaining a strap securing element, located at the free end of the articulated arm. A means for retaining the securing element enables the strap securing element to be passed from one side of the load to the other, and to be released once it has reached the opposite side. Preferably said means for releasably retaining a securing element is a protrusion, or alternatively a carabiner, enabling ease of attachment and release of the securing element.

Preferably, wherein when in use, in said second, articulated configuration, the free end of the articulated arm is accessible on the side of the load remote from the operator, enabling access to the means for releasably retaining a securing element.

Preferably, the device comprises a means for preventing said arm from articulating in said first, extended configuration, and wherein rotation of the arm about the longitudinal axis of the arm allows articulation of the arm to said second, articulated configuration. The first, extended configuration enables the arm to be raised such that the free end, remote from the operator, can be place on the top of the load. On rotating the arm about the longitudinal axis, the arm is able to articulate and move to said second, articulated configuration, enabling the free arm to be moved across the top of the load.

The means for preventing said arm from articulating in said first, extended configuration maybe a hinge. Further, the means for articulation of the arm between said first, extended configuration and said second, articulated configuration may also be a hinge. Said hinge may provide a simple means for preventing articulation of the arm.

The articulated arm may comprise two pivotally connected arm portions.

The device preferably comprises means for preventing relative rotation of the arm portions in one direction beyond the first, extended configuration.

The device preferably comprises means for preventing relative rotation of the arm portions into an aligned position, where the arm portions lie adjacent and alongside one another.

The means for preventing relative rotation of the arm portions beyond the first, extended configuration are the same as the means for preventing relative rotation of the arm portions into the aligned position.

The relative rotation preventing means may be a protrusion on one arm portion which engages the other arm portion to prevent relative rotation of the arm portions.

The protrusion can be preferably moved between an active position and an inactive position.

The movable protrusion is preferably a retractable pin which can be moved into and out of the one arm portion to provide an angle limiting stop, biased towards its active, stop position. The retractable pin is preferably spring biased towards its stop position.

The means for articulation of the arm between said first, extended configuration and said second, articulated configuration maybe a joint, wherein said joint axis is perpendicular to the plane of the arm.

According to a second aspect of the invention, there is provided a method of using said apparatus for passing a strap over a high load comprising the steps of a) operating the articulated arm in said first, extended configuration, b) attaching an end of a strap to the free end of the articulated arm, c) holding one end of the arm and raising the free end of the arm, remote from the operator, to the top of the load, d) rotating the articulated arm about the longitudinal axis, allowing articulation of the arm to said second, articulated configuration, e) moving the free end of the arm across the top of the load, beyond the load on the side remote from the operator, f) releasing the strap from the free end of the articulated arm, and g) retracting the articulated arm from on top of the load.

According to a third aspect of the invention, there is provided a method of using said apparatus for passing a strap over a high load comprising the steps of a) operating the articulated arm in said first, extended configuration, b) holding one end of the arm and raising the free end of the arm, remote from the operator, to the top of the load, c) rotating the articulated arm about the longitudinal axis, allowing articulation of the arm to said second, articulated configuration, d) moving the free end of the arm across the top of the load, beyond the load on the side remote from the operator, e) attaching the strap to the free end of the articulated arm, and f) retracting the articulated arm from on top of the load and releasing said strap from the free end of the articulated arm.

These methods are particularly effective since the operator can use the apparatus to safely pass a strap over the top of a high load either by firstly attaching the strap and passing it over the load, or by secondly passing the articulated arm over the load and attaching the strap to pass it back over the top of the load. This method has reduced risk compared to climbing on to the trailer, and is less time consuming that manually passing a strap over the load using stairs or other means to climb to the top of the load. Furthermore, this method can be used where there is restricted space above the top of the load.

Preferably, the step of attaching the strap to the free end of the articulated arm comprises securing a strap securing element to the means for releasably retaining a securing element at the free end of the arm.

Preferably, a pole can be used to attach the securing element to, or release the strap securing element from the means for releasably retaining a securing element. This enables the operator to remain at a ground level during the process of passing the securing element over the top of the load.

Preferably, these methods can be repeated at different locations to so emplace a plurality of straps over the load.

The method may further comprise securing a load to a load surface, comprising the step of tightening the strap to secure the load.

In particular, the apparatus and method can be used wherein the high load is on a lorry and said articulated arm extends the width of the lorry when in said second, articulated configuration. The width of the lorry may be in the range 2300 to 2900 mm and the overall height of the lorry may be in the range 4000 to 4500 mm.

By way of example, one embodiment of a device according to the invention and a modification thereof, and examples of methods for placing a strap over a load, will now be described with reference to the accompanying drawings in which:-
Figure 1 shows an embodiment of a device according to the invention in a folded state, in particular, Figure 1 a is a side view of the device, Figure 1b is a plan view of the device of Figure 1 and Figure 1c is an underneath plan view of the device of Figure 1.
Figure 2 is a side view of the device of Figure 1 in use.
Figure 3 is a perspective view showing in detail how arm parts of the articulated arm are rotatably connected.
Figure 4a shows a detail of an engagement element at the end of the free end of the articulated arm engaged by a strap.
Figure 4b is a side of the end feature shown in Figure 4a.
Figure 5a shows an alternative end engagement portion with a strap engaged.
Figure 5b is an alternative view of the end arrangement shown in Figure 5a.
Figure 6 shows a first step in a method of using the device of Figures 1 to 5 to pass a strap over a high load, with the device in an extended configuration.
Figure 7 shows a second step in the method.
Figure 8 shows a step in the method where the free end of the articulated arm rests on the load and is rotated to enable articulation.
Figure 9 shows the next step in the method.
Figure 10 shows the next step in the method with the strap pulled across the top of the load and accessible on the far side thereof from the operator.
Figure 11 illustrates withdrawal of the device, and
Figure 12 illustrates the step of hooking and pulling down the strap over the load.

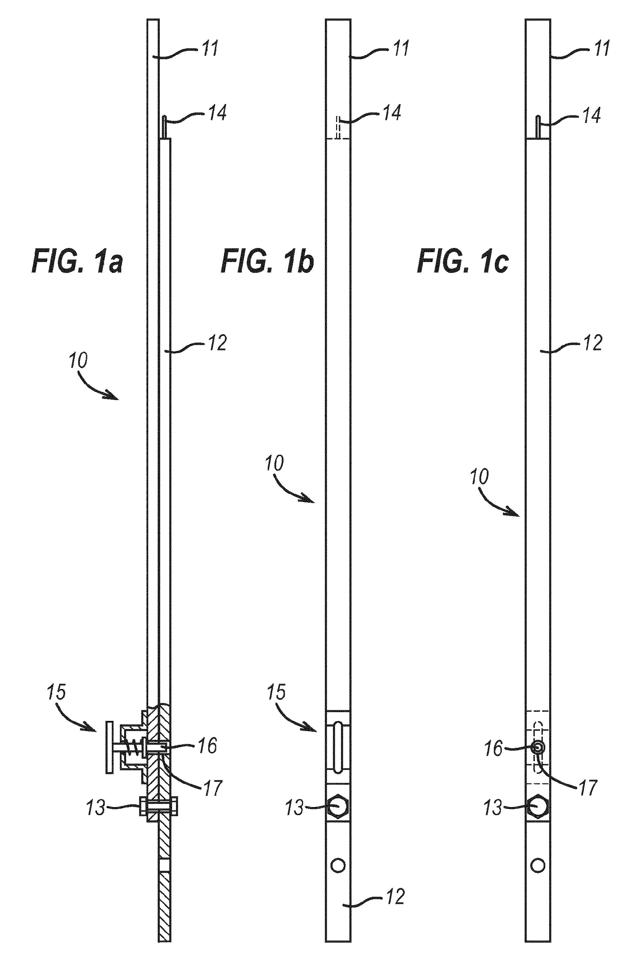

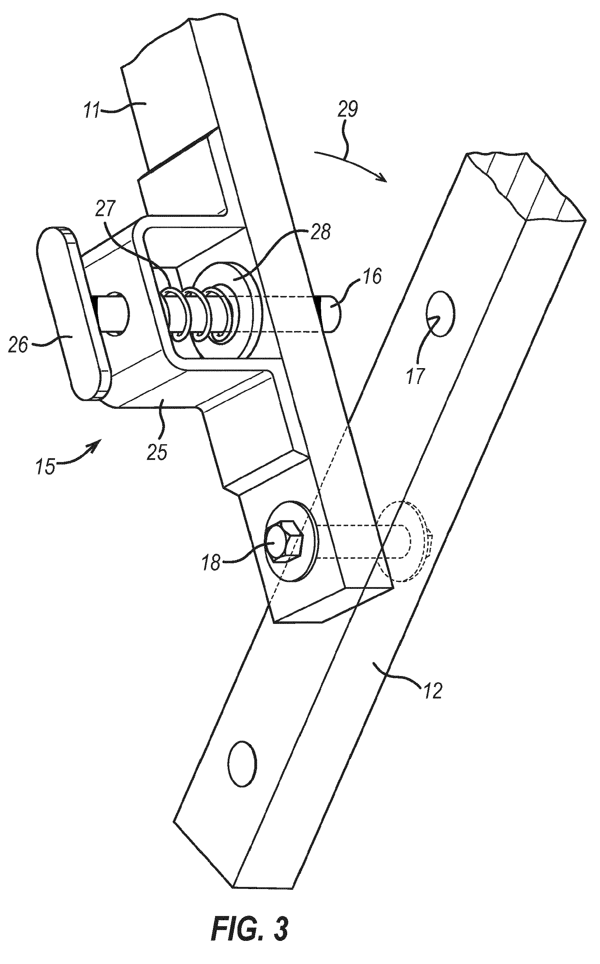

Figure 1 shows an embodiment of a device 10 for passing a strap over a high load. The device 10 is an articulated arm having two rotatably connected arm portions 11, 12 formed of metal (for example aluminium or other suitably strong but relatively light metal) or other suitably light but strong material. The arm portions 11 and 12 are rotatably connected at 13 and the rotatable connection will be described in more detail in relation to Figure 3. Second arm portion 12 has a protruding finger 14 extending from its free end, the finger 14 being of, engaged, for example by screw thread, into the end of the arm portion 12.

The first arm portion 11 carries a lock and stop mechanism generally indicated at 15. The lock and stop mechanism 15 will be described in more detail in relation to Figure 3. Figure 1 shows the device in a folded state for storage, with the arm portions 11 and 12 held in alignment and locked by engagement of a pin 16 of the lock and stop mechanism 15 engaged in a hole 17 in the second arm portion 12.

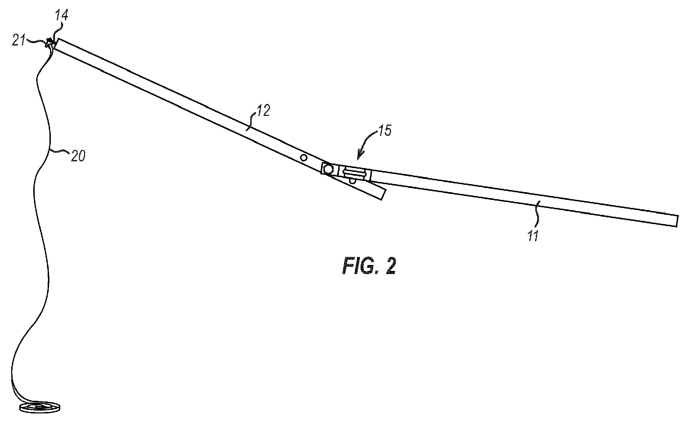

Figure 2 shows the device of Figure 1 in an open state with lock and stop mechanism 15 operating to prevent the angle between arm portions 11 and 12 extending beyond that shown in Figure 2. Figure 2 shows a strap 20 carrying at its free end an engagement ring 21, the engagement ring 21 engaging the finger 14 at the end of the arm portion 12.

Figure 3 shows in detail the rotatable connection between the arm portions 11 and 12. A steel bolt 18 passes through holes in both arm portions 11 and 12 and is retained by a nut (not shown) at its free end.

The lock and stop mechanism 15 is shown in detail. The lock and stop mechanism 15 has a metal support frame 25 through which the pin 16 passes, the pin 16 extending from an operating handle 26. A spring 27 sits around the pin 16 between the frame 25 and an annular spring stop 28 secured to the pin 16. The spring 27 biases the pin 16 to the position shown in Figure 3 and the handle 26 can be used to retract the pin 16 against the bias of the spring 27 when it is wished to disengage the pin from either a locking position (in which it is engaged in the hole 17 as shown in Figure 1) or the stop function as shown in Figure 3. It will be appreciated that the pin 16 in the position shown in Figure 3 will prevent the arm portions 11 and 12 from rotating beyond the position at which the pin 16 engages the side of the arm portion 12.

The lock and stop mechanism 15 also provides a significant safety feature for the device 10. As can be seen in Figure 2, and will be described later when use of the device is described, the device is a long articulated arm and it is important that an operator does not run the risk of having fingers or thumbs caught between the arm portions 11 and 12 when the arm portions 11 and 12 approach the folded state shown in Figure 1. With the pin 16 extended under the bias of the spring 27, the pin 16 will prevent the arm portion 11 closing over the arm portion 12 when the pin 16 contacts the side of the arm portion 12. This can be seen clearly in Figure 3 as the pin 16 will act on the side of the arm portion 12 if the arm portion 11 moves towards the arm 12 in the direction of the arrow 29. In order to complete alignment of the arm portions 11 and 12 in their folded position, the operating handle 26 must be used to lift the pin against the bias of the spring 27 to clear the arm portion 12. Positive action by the operator is therefore needed and the safety action of the pin 16 will thus prevent inadvertent alignment of the arm portions 11 and 12 and reduce risk of injury.

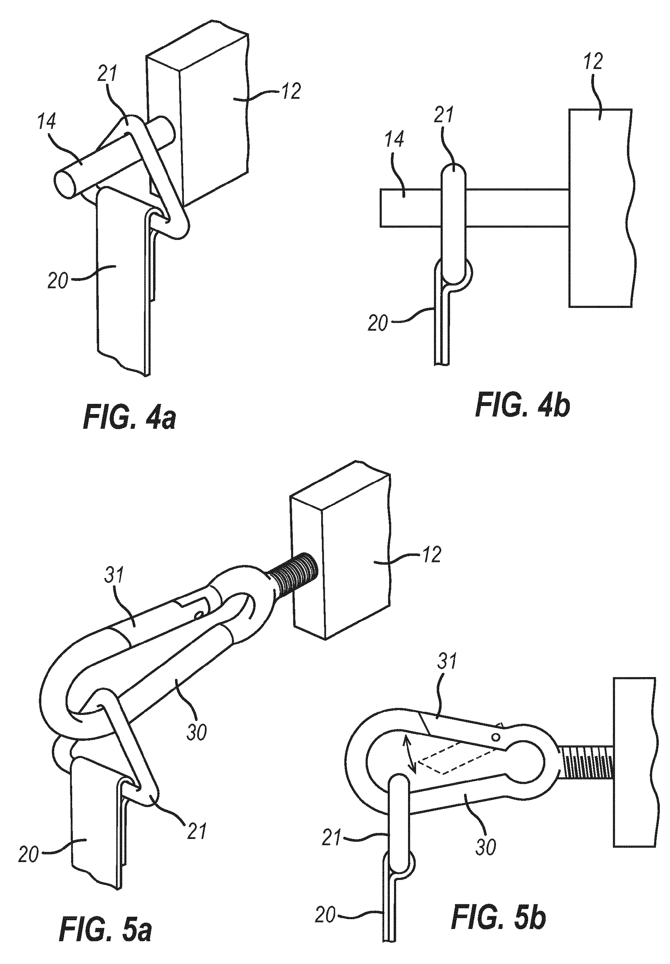

Figure 4 shows in detail the finger 14 at the free end of the arm portion 12, together with engagement of the ring 21 at the end of the strap 20. As described previously, the finger 14 is of steel or other suitable metal or material and can conveniently be secured in the end portion of the arm portion 12 by screw threading (not shown), adhesive or other suitable method. The ring 21 is shown as triangular but could be any convenient shape and is held in a loop at the end of the strap 20.

Figure 5 shows an alternative strap holding arrangement where a carabiner is secured to the free end of the arm portion 12 in rigid fashion. Screw threads are shown but other methods could be used. The carabiner 30 is of standard shape and includes a hinged gate 31 which allows the strap ring 21 to be pulled into the carabiner against spring bias. Once the strap ring 21 is inside the carabiner loop, the gate 31 will spring shut. The Figure 5 modification will be referred to later in relation to an alternative method for passing the strap 20 over a high load.

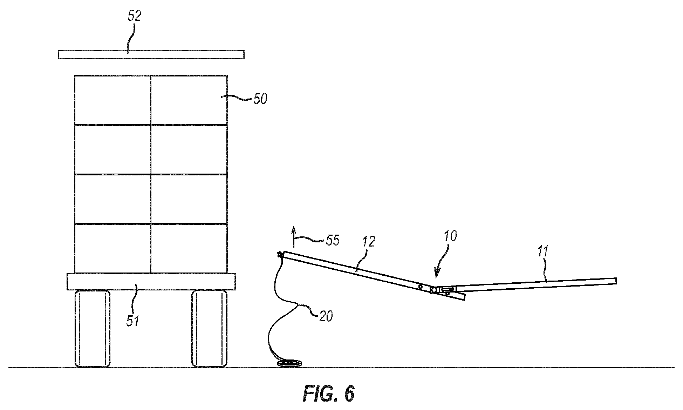

Figures 6 to 12, a preferred method of passing the strap 20 over a high load 50 will be described. The load 50 is shown diagrammatically on a lorry bed 51 and, again diagrammatically, a roof 52 of the lorry is shown above the load. One of the problems associated with passing a securing strap over a load in this sort of arrangement is that the space between the load 50 and the roof 52 is small and at a high level, making it problematic to use readily available tools such as a pole to draw or push across a strap, because the operator has to be at the height of the top of the load in order to carry out this operation.

In Figures 6 to 12, the operator is not shown, but will hold the free end of the first arm portion 11. Thus, in Figure 6, the arm portion 11 and arm portion 12 are shown in the Figure 2 extended configuration, and in this position, the pin 16 of the lock and stop mechanism 15 prevents further rotation of the arm portions 11 and 12 relative to each other, thus enabling the free end of the second arm portion 12 to be raised in the direction shown in arrow 55, carrying the strap 20 with it.

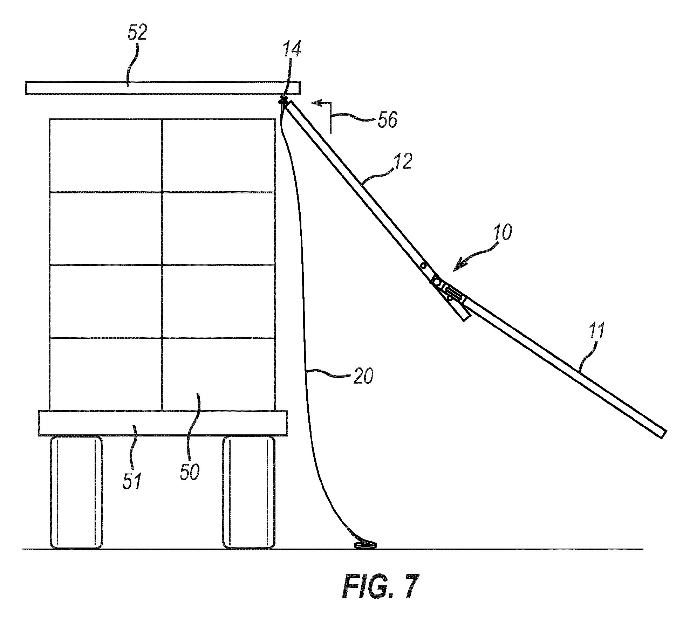

From the position shown in Figure 6, the operator raises the free end of the arm portion 12 and its finger 14 to the position shown in Figure 7. The operator rests the free end of the arm portion 12 on the top corner of the load, in preparation for the next step of pulling the strap across the top of the load as suggested by the arrow 56 in Figure 7.

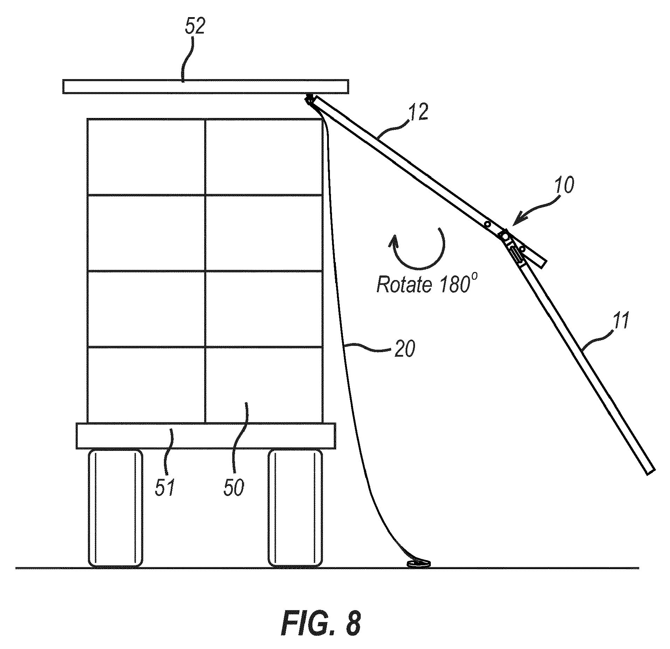

For the operator to be able to enter the arm portion 12 into the space between the load and the roof, the next step is to rotate the articulated arm through 180° by rotating the first arm portion 11 in that manner. This achieves the position shown in Figure 8 and it would be appreciated that upward movement of the first arm portion 11 will move the arm portion 12 towards the horizontal, the pin 16 moving away from the arm portion 12.

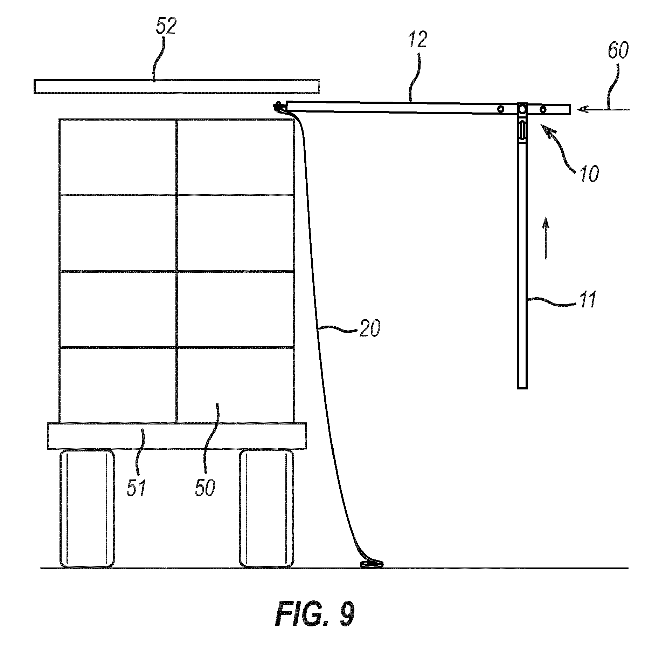

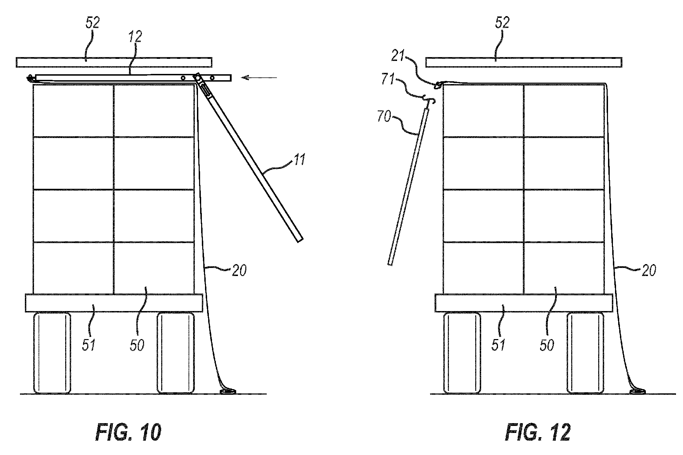

Figure 9 shows the device with the arm portion 12 horizontal and the arm portion 11 vertical, and in this position, the arm portion 12 can be pushed across the top of the load 50 in the direction shown in arrow 60, thereby drawing the strap 20 across the top of the load until the position shown in Figure 10 is achieved.

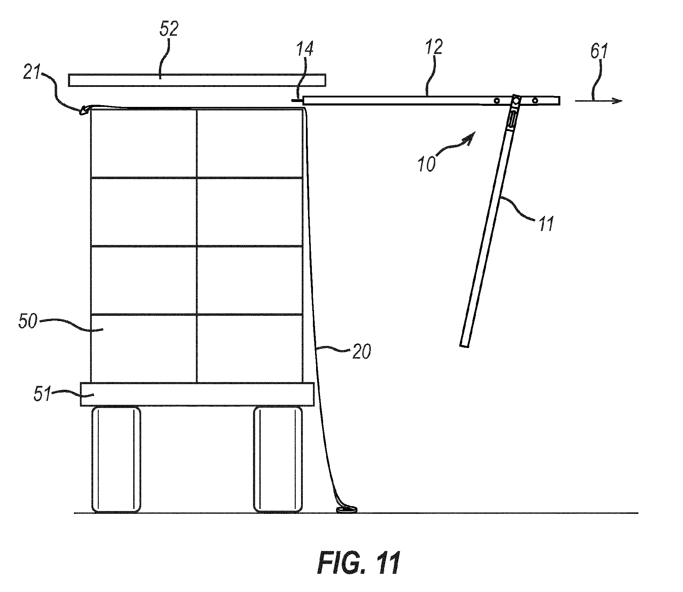

The next step, shown in Figure 11, is to remove the device 10 from engagement with the strap 20. In that the strap is pulled across the top of the load 50 because the finger 14 engages the strap ring 21, it will be seen that retraction of the arm portion 12 in the direction of arrow 61 will disengage the finger 14 from the strap ring 21, leaving the strap in the position shown in Figure 11 with the strap ring 21 hanging free and accessible.

With the device retracted, it is straightforward for the operator to move around to the other side of the lorry, raise a pole 70 with a hook 71 or other suitable engagement portion to the strap ring 21 to pull down the strap to the bottom of the load and attach it to the lorry bed.

An alternative method of passing the strap 20 over the top of the load 50 can be achieved using the modified device described in Figure 5. While the rest of the device is exactly the same as described previously, the end of arm portion 12 is different. Using the apparatus of Figure 5, the method sequence is as follows:-

The operator raises the device to the top of the load and rotates the device through 180° to achieve the Figure 8 position. The device is then moved across the top of the load until it reaches the Figure 10 position. In this position, the carabiner 30 is accessible and the operator raises on a pole the free end of the strap 20 and clips the strap ring 21 into the carabiner 30. The operator goes to the other side of the vehicle, retracts the device in a similar fashion to that described in relation to Figure 11, pulling with it the strap 20. Full retraction and lowering of the device brings the strap 20 with it and the strap can then be attached to the lorry bed or adjacent to it.

It will be appreciated that many suitable materials could be used for the arms of the device, and also that many different articulation mechanisms for the arm portions could be provided instead of the bolt described. For example, hinges could be used and, indeed, the device for limiting rotation of the arm portions 11 and 12 relative to one another beyond a certain angle could be achieved in a different way from that described and shown in relation to Figure 3. For example, arm portion 12 could be hinged to arm portion 11, with the hinge located inwardly of the end of the arm portion 12 to provide a stop to rotation by abutment of the free end of the arm portion 12 with the arm portion 11. Various modifications of this sort are contemplated within the scope of the invention as claimed.

## Claims

1. A device for passing a strap over a high load, the device comprising:
an articulated arm operable in a first, extended configuration, in which an operator can hold one end of the arm and raise the free end of the arm remote from the operator to the top of the load,
a second, articulated configuration, in which the free end of the arm can be moved across the top of the load, beyond the load on the side remote, in use, from the operator, and
a means for preventing said arm from articulating in said first, extended configuration, and wherein rotation of the arm about the longitudinal axis of the arm allows articulation of the arm to said second, articulated configuration.

2. The device of claim 1, comprising means for releasably retaining a strap securing element, located at the free end of the articulated arm.

3. The device of claim 2, wherein when in use, in said second, articulated configuration, said free end of the articulated arm is accessible on the side of the load remote from the operator, enabling access to said means for releasably retaining a securing element.

4. The device of any one of the preceding claims wherein the articulated arm comprises two pivotally connected arm portions.

5. The device of claim 4 comprising means for preventing relative rotation of the arm portions in one direction beyond the first, extended configuration.

6. The device of claim 4 or claim 5 comprising means for preventing relative rotation of the arm portions into an aligned position, where the arm portions lie adjacent and alongside one another.

7. The device of claim 6 as dependent on claim 5 wherein the means for preventing relative rotation of the arm portions beyond the first, extended configuration are the same as the means for preventing relative rotation of the arm portions into the aligned position.

8. The device of any one of claims 5 to 7, wherein the relative rotation preventing means is a protrusion on one arm portion which engages the other arm portion to prevent relative rotation of the arm portions.

9. The device of claim 1, wherein the means for preventing said arm from articulating in said first, extended configuration is a hinge.

10. The device of claim 9, comprising a hinge for articulation of the arm between said first, extended configuration and said second, articulated configuration.

11. The device of claim 1, wherein the means for preventing said arm from articulating in said first, extended configuration is an extension of a portion of the arm.

12. The device of any one of claims 1 to 8 or comprising a joint to provide articulation of the arm between said first, extended configuration and said second, articulated configuration is a joint, wherein the joint having an axis perpendicular to the plane of the arm.

13. A method for passing a strap over a high load, using a device of any one of the preceding claims, the method comprising;
operating the articulated arm in said first, extended configuration;
attaching an end of the strap to the free end of the articulated arm;
holding one end of the arm and raising the free end of the arm, remote from the operator, to the top of the load;
rotating the articulated arm about the longitudinal axis, allowing articulation of the arm to said second, articulated configuration;
moving the free end of the arm across the top of the load, beyond the load on the side remote from the operator;
releasing said strap from the free end of the articulated arm; and
retracting the articulated arm from on top of the load.

14. A method for passing a strap over a high load, using a device of any one of claims 1 to 12, the method comprising;
operating the articulated arm in said first, extended configuration;
holding one end of the arm and raising the free end of the arm, remote from the operator, to the top of the load;
rotating the articulated arm about the longitudinal axis, allowing articulation of the arm to said second, articulated configuration;
moving the free end of the arm across the top of the load, beyond the load on the side remote from the operator;
attaching the strap to the free end of the articulated arm;
retracting the articulated arm from on top of the load and releasing said strap from the free end of the articulated arm.

15. The method of claim 13 or 14 as dependent on claim 2 or any claim as dependent on claim 2, wherein the step of attaching the strap to the free end of the articulated arm comprises attaching a strap securing element to the means for releasably retaining a securing element at the free end of the arm.
